# EUROPEAN PATENT SPECIFICATION

(11) **EP 3 759 390 B1**
(45) Date of publication and mention of the grant of the patent: **27.03.2024**
(21) Application number: 19705199.8
(22) Date of filing: 21.02.2019
(51) Int. Cl.: F23G 5/44, F23G 5/027, F23J 15/02

(54) **OPTIMIZED PROCESS AND SYSTEM FOR THE PRODUCTION OF A HEATED FLUID BY MEANS OF COMBUSTION OF A FUEL**
OPTIMIERTES VERFAHREN UND SYSTEM ZUR HERSTELLUNG EINER HEIZBAREN FLÜSSIGKEIT DURCH VERBRENNUNG EINES BRENNSTOFFES
PROCÉDÉ OPTIMISÉ ET SYSTÈME DE PRODUCTION D'UN FLUIDE CHAUFFÉ PAR COMBUSTION D'UN COMBUSTIBLE

(30) Priority: 02.03.2018 IT 201800003238
(43) Date of publication of application: 06.01.2021
(73) Proprietor: Vomm Impianti e Processi S.P.A., 20089 Rozzano (MI) (IT)
(72) Inventor: VEZZANI, Massimo, 20089 Rozzano (Milano) (IT)
(74) Representative: Botti & Ferrari S.p.A.
(86) International application number: PCT/EP2019/054318
(87) International publication number: WO 2019/166320

(56) References cited:
- EP-A1- 3 031 881
- EP-A2- 2 494 166
- WO-A1-2010/057717
- WO-A2-2012/004739
- CN-A- 106 287 642
- US-A- 5 713 195
- US-A1- 2009 241 814
- US-B1- 6 533 844
- US-B2- 7 438 744
- DATABASE WPI Week 201707 Thomson Scientific, London, GB; AN 2017-04548S & CN 106 287 642 A (UNIV CHONGQING SCI & TECHNOLOGY) 4 January 2017 (2017-01-04)

## Description

### Field of application

The present invention relates to an optimized process for the production of thermal energy by means of combustion of a fuel, comprising a step of abatement of solid particulate matter and dust inside a cyclone. According to an aspect of the present invention, such a process is applied to all fuels.

The invention also relates to a system suitable for carrying out the aforementioned process.

### Background art

In the art processes for the production of thermal energy which use plants comprising a solid, liquid or gaseous fuel heat generator, for obtaining a heated heat exchange fluid, are known.

Such plants may be made on a small scale, and in this case they consist of conventional boilers for domestic or residential use, designed to produce hot water, or they may be made on an industrial scale and are designed for the production of hot water, superheated water (temperature of about 110°C) and saturated or superheated steam (for the production of electricity).

In the case of a heat generator for industrial use, a process for the production of saturated or superheated steam usually comprises a first step of conveying the fuel to a combustion chamber by means of a conveyor.

Then, upon entry into the combustion chamber, the fuel is distributed over the surface of an igniting system in the vicinity of which there is a burner.

Once the burner is lit, the fuel starts the combustion process inside the combustion chamber with the consequent production of a flow of high-temperature exhaust gas which rises up towards the top of the combustion chamber.

Superheating units or banks are located at the top of the combustion chamber or, alternatively, inside an adjacent chamber and in communication therewith, these superheating units being usually in the form of a heat exchanger inside which a heat exchange liquid, commonly water, flows, said liquid being heated by the exhaust gas flow as a result of convention (and irradiation in the case where the superheating units are also positioned at the top of the combustion chamber). Usually, the superheating units come into contact with a gas flow at average working temperatures of about 650°C, said temperatures depending also on the type of fuel used.

With the aim of minimizing the polluting emissions and, where necessary, recovering uncombusted particles of fuel, following heat exchange with the aforementioned superheating units, the exhaust gas flow may be subjected to an abatement step by means of a cyclone or a multi-cyclone. A scrubber, an electrostatic precipitator and/or a bag filter, a reactor or whatever else is needed by the plant may be installed downstream of the said apparatus.

During the life cycle of the plant, the solid particulate matter and the dust produced in large amounts during combustion accumulate on the outer surface of the pipes which form the exchange and superheating units and which are exposed to the flow of exhaust gas produced.

The accumulation of solid matter on these pipes first and foremost causes a reduction in the efficiency of the heat conduction from the walls of these pipes (heated by means of contact with the gas flow) to the heat exchange fluid, reducing the overall efficiency of the boiler.

Moreover, in extreme cases, permanent obstructions may form and prevent the flow of the gas which passes through the zone in which the superheating units are arranged, thus negatively affecting operation of the entire plant.

In order to avoid an excessive accumulation of ash on the pipes of the superheating units, in some plants soot blowers are installed; with the aid of this type of machinery it is possible to create a flow of compressed air.

These blowers are periodically, and often automatically, activated and a flow of forced air is directed against the tube bundles of the superheating units so as to remove part of the solid material and the combustion ash which has been deposited thereon.

In any case the use of soot blowers and this step of removal of the material which has accumulated on the pipes of the superheating units does not solve the problem upstream, with the need in any case for frequent periodic cleaning of the plant, with the associated stoppage periods.

In order to reduce the contact between the solid material produced during combustion and the heat exchange and superheating banks, a settling chamber may be arranged between them. The settling chamber allows the retaining/storage of the dust.

Therefore, according to the prior art, the adiabatic combustion chamber may be of two types:
- of the single-body type, comprising an incineration chamber and a dust storage arrangement; or
- an incineration chamber and a separate dust storage chamber, with precipitation of the dust by means of expansion and consequent reduction of the temperature (with possible heat recovery via the walls).

This solution has in any case major drawbacks, first and foremost the need to remove mechanically - with simultaneous stoppage of the plant - the ashes following precipitation and accumulation in the bottom of said dust storage chamber.

Moreover, taking into account that about 30-40% of the dust present in the solid material transported by the exhaust gas flow has an average diameter of between 2-100 µm, the use of a settling chamber does not allow the finer dust particles to be eliminated properly.

Processes and systems according to the prior art are known from CN 106 287 642 A and US 2009/241814 A1.

Consequently, there exists the need in the sector to develop a process which overcomes the drawbacks of the solutions mentioned above.

The technical problem underlying the present invention is therefore that of developing a process for energy recovery by means of combustion of a fuel as well as a system which is able to carry out this process, without the need for frequent periodic stoppages in order to clean the different units which form the system and to remove the ash and solid matter which have accumulated inside them.

### Summary of the invention

This technical problem is solved, according to the present invention, by an innovative process for the production of a fluid heated by means of combustion of a fuel, said process comprising the following steps:
a) burning the fuel in a furnace which comprises a combustion chamber, thus generating a flow of exhaust gas comprising suspended solid particulate matter;
b) transferring said flow of exhaust gas to at least one cyclone, said at least one cyclone being located outside said combustion chamber;
c) subjecting said flow of exhaust gas to a forced abatement of the suspended solid particular matter inside the at least one cyclone, thus obtaining a purified exhaust gas flow and a solid precipitate which comprises said suspended solid particulate matter;
d) transferring the purified gas flow to a heat exchange unit, inside which a heat exchange fluid flows;
e) carrying out an indirect heat exchange between said purified exhaust gas and the heat exchange fluid, thus obtaining a flow of cooled purified gas and a flow of heated heat exchange fluid.

Moreover, the aforementioned flow of exhaust gas may comprise combusted or uncombusted particles.

The heat exchange fluid preferably consists of water or diathermic oil.

The aforementioned fuel may consist of any material suitable for being burned in a furnace; merely by way of a non-limiting example, the following materials are mentioned: the dry component of urban, industrial or special waste of a non-dangerous nature (plastic, paper, textile fibres and/or the like); waste material from the agricultural/food industry (e.g. walnut shells, hazelnut shells, rice husk, fruit stones, olive-pomace, maize cobs, wheat straw, cereal kernel rejected parts, sugar cane stems, pomace and grape pips), waste from the wood processing industry (wood chips, broken bark, glue or paint-treated wood compounds, chopped branches, wood shavings and sawdust), biomass from plant material, as well as fossil fuels.

According to the process described above, it is therefore possible to perform a step for abatement of the solid particulate matter and dust transported by the exhaust gas flow, before the flow comes into contact with the heat exchange units (commonly called superheating units or banks in the case where the heat exchange liquid is water), avoiding having to perform a precipitation step by means of settling chamber with all the advantages associated with not having to carry out this step, as will be explained in greater detail below.

The main technical result of the process according to the present invention is in any case a significant reduction in the suspended solid particulate matter transported by the exhaust gas flow before the latter is introduced into the generator of a heated heat exchange fluid and comes into contact with the heat exchange units located therein.

Consequently, by performing a step for introduction and abatement of the exhaust gas flow in at least one cyclone not only is it possible to obtain an abatement level which is much greater in quantitative terms compared to an abatement step by means of a settling chamber which retains the gas charged with suspended solid particulate matter, but also plant operation may be performed more or less continuously without the need for frequent periodic stoppages in order to empty the abatement zone.

In fact, as envisaged by the process according to the present invention, with the aid of at least one cyclone it is possible to collect and remove the dust constantly, as it accumulates inside the at least one cyclone, without having to stop the system used to carry out the process according to the invention.

Steps a-d of the aforementioned process are carried out in adiabatic conditions.

Advantageously, carrying out steps a-d of the aforementioned process in adiabatic conditions is helpful in order to achieve the following advantages.

Firstly, the exhaust gas flow does not undergo any condensation phenomena before reaching or inside said at least one cyclone, this way allowing an almost complete collection of solid particles inside the latter and avoiding the formation of unwanted tar precipitates.

Then, as the thus obtained purified gas exiting from said at least one cyclone enters into contact with the tubes of the heat exchange unit, almost all the heat generated by the combustion of the fuel can be transferred to the heat exchange fluid, which flows inside that heat exchange unit.

The exhaust gas flow and the purified exhaust gas flow have a temperature higher than 400°C, preferably higher than 450°C.

According to a preferred embodiment, the exhaust gas flow and the purified exhaust gas flow have a temperature higher than 600°C, preferably equal or higher than 650°C.

In an equally preferred manner, the exhaust gas flow and the purified exhaust gas flow have approximately the same speed.

Preferably, in the process according to the present invention, step b) and c) are carried out by means of at least two cyclones, which are preferably arranged in parallel.

Preferably, the at least one cyclone according to the process of the present invention may take the form of two cyclones with the same volume and hourly throughput, which operate in parallel.

Indeed, by performing a step of introduction and abatement of the exhaust gas flow in at least two cyclones it is possible to obtain an abatement level which is even greater in quantitative terms compared to an abatement step by means of a settling chamber.

Moreover, by operating in parallel, the at least two cyclones allow plant operation to be performed continuously without the need for frequent periodic stoppages for emptying the abatement zone, even in case of failure or breakdown of one of the at least two cyclones.

In an equally preferable manner, in the process according to the present invention, said steps b) and c) are carried out by means of a multi-cyclone, i.e. the at least one cyclone according to the process of the present invention can be a multi-cyclone.

The use of a multi-cyclone also allows particles with a diameter of up to 5 µm to be easily eliminated and allows even particles with a diameter of up to 2 µm to be eliminated.

Moreover, increasing the number of cyclones by carrying out the present process in a multicyclone, for example a multicyclone unit comprising 9 cyclones, has a positive effect not only in terms of separation efficiency, but also in terms of dissipated power in the cyclone, which means lower operation costs, in the presence of identical plant capacity and combusted fuel amount.

Indeed, according to the latter embodiment, when the aforementioned steps b) and c) are carried out by means of a multicyclone, it is possible to achieve an optimal performance in terms of separation efficiency (namely, even particles with a diameter as little as 2 µm can easily be collected), with a lowest possible dissipated power.

The choice to use a multi-cyclone depends on the average size of the particles of the solid particulate matter transported by the exhaust gas flow generated, and therefore depends on the type of material used as fuel, as well as the on the conditions in which the combustion is performed.

The process according to the present invention may further comprise a step of transferring this heated heat exchange fluid, preferably saturated or superheated steam or heated diathermic oil from the heat exchange unit to an electricity generating system or to a utility in an industrial or civil application (solely by way of a non-limiting example, remote heating systems for houses, industrial plants which use heating fluids, etc.),

In accordance with a preferred embodiment, the process according to the present invention may comprise a step of transferring the cooled exhaust gas flow to a pre-heater, wherein this pre-heater is capable to receive this cooled exhaust gas flow and generate a heated air flow.

Still in accordance with this preferred embodiment, said heated air flow may be transmitted to the furnace and fed into the combustion chamber of the furnace as a combustive air flow.

Therefore, this embodiment provides not only a process for the production of a heated heat exchange liquid, preferably saturated or superheated steam or heated diathermic oil, which overcomes the problems encountered in the art, but also a process comprising an additional step of heating an air flow and a step of supplying the latter to the combustion chamber, increasing the overall efficiency of the process according to the invention and minimizing the fuel consumption.

The technical problem mentioned above is also solved by means of a novel system with an original design for carrying out the process according to the invention, wherein this system comprises the following units:
- a furnace comprising a combustion chamber suitable for the combustion of a fuel with generation of an exhaust gas comprising suspended solid particulate matter;
- at least one cyclone in fluid communication with the aforementioned furnace, suitable for the abatement of said suspended solid material, wherein the at least one cyclone has an upper part, comprising an inlet opening for the entry of a gas flow from the furnace and an outlet opening for the exit of a purified gas flow from the at least one cyclone, and a bottom part, comprising a hopper for the collection of precipitated solid particulate matter;
- a generator of a heated heat exchange fluid, in fluid communication with the aforementioned at least one cyclone for receiving said purified gas flow and arranged downstream with respect to said at least one cyclone, wherein the generator of a heated heat exchange fluid comprises a heat exchange zone, in which there is located a heat exchange unit inside which a heat exchange fluid flows, and a discharge opening for the exit of a cooled exhaust gas flow.

The heat exchange fluid is preferably water or a diathermic oil; therefore, in the first case the generator of a heated heat exchange fluid is preferably a saturated or superheated steam generator.

More specifically, the furnace included in the system according to the present invention comprises an inlet mouth of the combustion chamber, through which the fuel is supplied, and an opening for the introduction of combustive air into the combustion chamber.

Moreover, the combustion chamber may comprise in turn a combustion zone, or igniting system, and a zone for conveying the exhaust gas flow, situated above the combustion zone and formed so as to convey this flow towards an outlet opening for transferring the flow to at least one cyclone, situated downstream of the combustion chamber.

In detail, it is specified that the furnace and the at least one cyclone included in the system according to the present invention form together a single adiabatic chamber.

Preferably, the at least one cyclone according to the system of the present invention consists of at least two cyclones, said at least two cyclones being more preferably arranged in parallel.

Preferably, the at least one cyclone according to the system of the present invention can be a multi-cyclone.

Preferably, the aforementioned heat exchange unit is a conventional heat exchanger.

Preferably, the system according to the present invention may further comprise an inlet pipe for transferring a heat exchange fluid to the heat exchange unit and in fluid communication therewith.

In a similar manner, such a system may further comprise an outlet pipe for transferring the heated heat exchange fluid, preferably superheated steam or saturated steam or heated diathermic oil, from the heat exchange unit to a system for the generation of electricity, not shown since entirely conventional, or to a utility in an industrial or civil application, as mentioned above.

In accordance with a preferred embodiment, the system according to the invention may comprise an additional generator of a heated heat exchange fluid, in fluid communication with the aforementioned discharge opening, for receiving said flow of cooled exhaust gas, wherein the generator of a heated heat exchange fluid comprises a heat exchange zone in which there is located an additional heat exchange unit inside which a heat exchange fluid flows, and comprises an additional discharge opening for the exit of a further cooled exhaust gas flow.

Furthermore, the system according to the invention may comprise an additional outlet pipe, in fluid communication with the additional heat exchange unit, for transferring the heated heat exchange fluid, preferably heated diathermic oil or steam, from the additional heat exchange unit to a system for the generation of electricity, not shown since entirely conventional, or to a utility in an industrial or civil application.

In accordance with a further preferred embodiment, the system according to the present invention may further comprise a pre-heater situated downstream of the generator of a heated heat exchange fluid or the additional generator of a heated heat exchange fluid, wherein such a pre-heater is in fluid communication with the discharge opening of the generator of a heated heat exchange fluid or with the additional discharge opening of the additional generator and is able to receive the cooled exhaust gas flow and generate a flow of heated air.

More specifically, the aforementioned pre-heater has the function of making use of the residual heat in a flow of cooled exhaust gas and transferring it to a flow of air, preferably air from the atmosphere, which is thus heated.

This heated air flow may be fed into the combustion chamber by means of a header in fluid communication with the pre-heater and with the inlet mouth of the combustion chamber of the furnace, as a combustive air flow.

Further characteristic features and advantages of the present invention will emerge from the description, provided hereinbelow, of a number of preferred examples of embodiment provided by way of a non-limiting example with reference to the accompanying drawings.

### Brief description of the drawings

Figure 1 shows in schematic form a system for the production of a heat exchange fluid heated by means of combustion of a fuel according to the present invention.
Figure 2 shows in schematic form a different embodiment of system for the production of a heat exchange fluid heated by means of combustion of a fuel according to the present invention.

### Detailed description of a preferred embodiment

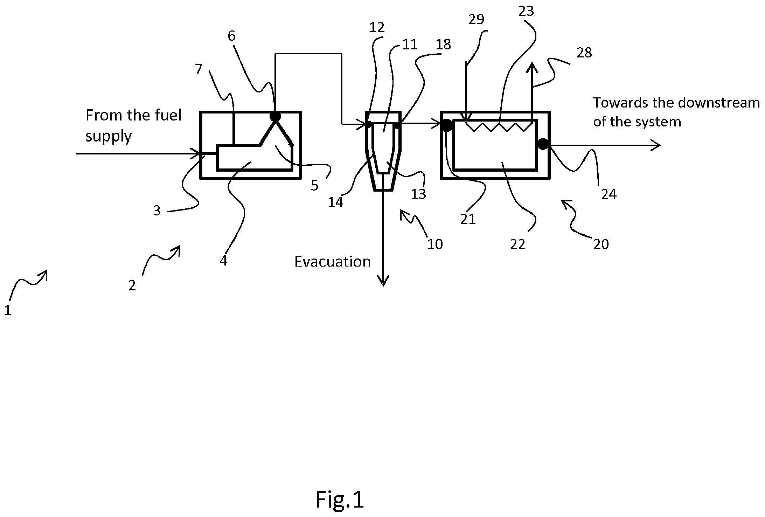

Figure 1 shows a system, denoted overall by 1, for the production of a heated heat exchange fluid by means of combustion of a fuel comprising a furnace 2, a cyclone 10 downstream of said furnace and a generator of a heated heat exchange fluid 20, downstream of the cyclone 10.

The furnace 2 comprises in turn a combustion chamber 4 and an inlet mouth 3 of the combustion chamber which is structured so as to facilitate the introduction of fuel into the combustion chamber.

Furthermore, the combustion chamber 4 comprises in turn a combustion zone and an opening 7 for the introduction of an air flow into the combustion chamber 4.

The combustion chamber 4 may have, situated inside it, an igniting system, preferably a grate-type igniter, which is capable to ensure distribution of the fuel and on which ignition of the fuel takes place; this igniting system is not shown since it is entirely conventional.

The combustion chamber also comprises a zone 5 for conveying the flow of exhaust gas which is generated following the combustion of the fuel, this conveying zone 5 being situated above the combustion zone 4 and being formed so as to convey said flow towards an outlet opening 6 for transferring the exhaust gas flow to the cyclone 10 situated downstream of the combustion chamber 4 and in fluid communication therewith.

The cyclone 10 is a cyclone for abatement of suspended solid material transported by a gas flow. The cyclone 10 has substantially the form of an overturned cone and is formed so as to have a upper part 11 which has a cross-section with a predefined diameter; this upper part 11 comprises an entry opening 12 for the exhaust gas flow, an internal cylinder for conveying an exhaust gas flow purified upon exiting the cyclone 10 (not shown since entirely conventional) and an outlet opening 18 for exit of the purified exhaust gas flow and transferring said flow to a generator 20 of a heated heat exchange fluid, situated downstream of and in fluid communication with the cyclone 10.

The cyclone 10 also comprises a bottom part 13 situated underneath the upper part 11; this bottom part 13 has a cross-section with a smaller diameter than the upper part 11. Moreover, the bottom part 13 comprises in turn a hopper 14 shaped so as to facilitate the sliding and collection of the precipitated solid material from the upper part 11.

The generator 20 of a heated heat exchange fluid, arranged downstream with respect to the cyclone 10 as evident from the drawings, comprises in particular an inlet opening 21 for the introduction of the purified exhaust gas flow into a heat exchange zone 22, the latter in turn comprising a heat exchange unit 23, inside which a heat exchange fluid - preferably water or diathermic oil - flows, and a discharge opening 24 for the exit of a cooled exhaust gas flow.

Preferably, the heat exchange unit 23 is a conventional heat exchanger.

In an equally preferable manner, the system 1 according to the present invention may further comprise an inlet pipe 29 for transferring a heat exchange fluid to the heat exchange unit and in fluid communication therewith.

In a similar manner, said system 1 may further comprise an outlet pipe 28, in fluid communication with the heat exchange unit 23, for transferring the heated heat exchange fluid, preferably heated diathermic oil or steam, from the heat exchange unit 23 to a system for the generation of electricity, not shown since entirely conventional, or to a utility in an industrial or civil application.

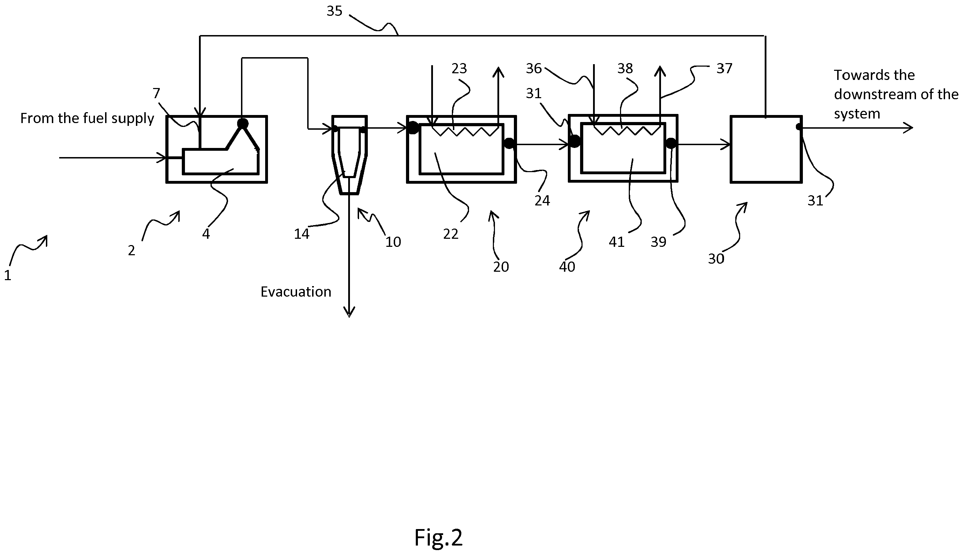

Differently, Figure 2 shows a particular embodiment according to the present invention in which the system 1 further comprises an additional generator 40 of a heated heat exchange fluid in fluid communication with the aforementioned discharge opening 24.

The additional generator 40 is capable to receive this cooled exhaust gas flow and comprises in turn an inlet mouth 31 and a heat exchange zone 41 in which there is located an additional heat exchange unit 38 inside which a heat exchange fluid flows, and an additional discharge opening 39 for the exit of a further cooled exhaust gas flow.

Correspondingly, said system 1 shown in Figure 2 may further comprise an outlet pipe 37, in fluid communication with the additional heat exchange unit 23, for transferring the heated heat exchange fluid, preferably heated diathermic oil or steam, from the additional heat exchange unit 23 to a system for the generation of electricity, not shown since entirely conventional, or to a utility in an industrial or civil application.

Moreover, the embodiment shown in Figure 2 shows a pre-heater 30 in fluid communication with the discharge opening 39 of the additional generator 40 and able to receive the cooled exhaust gas flow and generate a flow of heated air to be transferred to the combustion chamber 4 of the furnace 2.

More specifically, the pre-heater 30 communicates with a header 35 in fluid communication with the opening 7 for the introduction of an air flow into the combustion chamber 4.

Moreover, the pre-heater 30 also has a discharge opening 31 for releasing the cooled exhaust gas flow downstream of the system.

Operation of the system according to the present invention may be further explained as follows, with reference to a non-limiting embodiment.

The fuel is introduced into the furnace 2, then the fuel is ignited, generating an exhaust gas flow containing suspended solid particulate matter which is transferred to a pair of cyclones 10, which can be arranged in parallel, where a centrifugal force is imparted and a downwards spiral movement is induced.

The flow charged with suspended solid material thus undergoes an abatement step with consequent precipitation of these solids suspended in and transported by the flow.

Thereafter, the purified exhaust gas flow thus generated and output from the cyclones is transferred to a unit 20 for generating a heated heat exchange fluid (specifically, a steam generator) located downstream of the pair of cyclones 10.

More specifically, the unit 20 used for generating a heated heat exchange fluid comprises a series of tube heat exchangers 23 inside which water from aqueduct circulates. Following the indirect heat exchange performed between the purified exhaust gas flow and the water circulating inside the pipes of the heat exchanger a steam flow and a cooled exhaust gas flow are produced.

A check carried out inside the steam generating unit 20 confirmed that the outer surface of the pipes of the superheating units was substantially intact and that there was no significant deposition of solid material thereon.

Thanks to the process according to the present invention and the system described above in detail it is possible to overcome the problems of the prior art, as mentioned above, preventing first and foremost the transmission of suspended solid particulate matter and dust, generated during combustion and transported by the exhaust gas flow to the heat exchange units situated in the unit for generating a heated heat exchange fluid.

In fact, according to the present invention, it is possible to obtain this technical advantage owing to an abatement step performed by means of at least one cyclone arranged between a furnace, inside which a combustion step is carried out, and a unit for generating a heated heat exchange fluid, inside which an indirect heat exchange between this gas flow and a heat exchange fluid occurs.

This abatement step carried out by means of at least one cyclone, compared to a conventional abatement chamber, gives rise to numerous technical advantages including:
- shorter maintenance stoppage times; indeed long and excessively frequent emptying of the zone for storage of the precipitated solid material is not required, since the at least one cyclone allows constant expulsion of said material, without a general stoppage of the system;
- the exhaust gas flow entering the at least one cyclone has a speed which is entirely comparable to the speed of a purified exhaust gas flow exiting the same unit, thus ensuring faster response times and a greater throughput;
- more efficient and improved abatement resulting in an exhaust gas flow which is purified compared to the gas flow entering the at least one cyclone.

Furthermore, with the process and the system according to the present invention it is possible to obtain decidedly higher temperatures compared to the similar processes and systems present on the market; indeed, since the exhaust gas flow entering the unit for generating a heated heat exchange fluid - which contains an entirely negligible amount of suspended solids - may be transferred to the heat exchange units which are situated in said unit for generating a heated heat exchange fluid, there is no risk that, during the life cycle of the system, the high-temperature ash may adhere massively to the pipes of the heat exchange units.

## Claims

1. A process for the production of a heat exchange fluid heated by the combustion of a fuel, said process comprising the steps of:
a) burning said fuel in a furnace which comprises a combustion chamber, thus generating a flow of exhaust gas comprising suspended solid particulate matter;
b) transferring said flow of exhaust gas to at least one cyclone, which is located outside said combustion chamber;
c) subjecting said flow of exhaust gas to a forced abatement of said solid particulate matter inside said at least one cyclone, thus obtaining a purified exhaust gas flow and a solid precipitate which comprises said solid particulate matter;
d) transferring said purified exhaust gas flow to a heat exchange unit inside which a heat exchange fluid flows;
e) carrying out an indirect heat exchange between said purified exhaust gas flow and said heat exchange fluid, thus obtaining a flow of cooled purified gas and a heated heat exchange fluid;
wherein said exhaust gas flow and said purified exhaust gas flow have a temperature higher than 400°C;
**characterized in that**
said steps a-d are carried out in adiabatic conditions.

2. The process according to claim 1, wherein said steps b) and c) are carried out by means of at least two cyclones, said at least two cyclones preferably operating in parallel.

3. The process according to claim 1 or 2, said process comprising the steps of:
- transferring said cooled exhaust gas flow to a pre-heater to generate a flow of heated air;
- transferring to said furnace and feeding to the combustion chamber of said furnace said flow of heated air, as a flow of combustive air.

4. The process according to any one of claims 1 to 3, said process comprising a further step of transferring said heated heat exchange fluid from said heat exchange unit to a system for the generation of electricity.

5. A system (1) for carrying out the process according to claim 1, said system comprising the following units:
- a furnace (2) comprising a combustion chamber (4) suitable for the combustion of a fuel with generation of an exhaust gas comprising suspended solid particulate matter;
- at least one cyclone (10) in fluid communication with said furnace (2) for the abatement of said suspended solid particulate matter, wherein said at least one cyclone (10) comprises a upper part (11), comprising an inlet opening (12) for the entry of said gas flow from said furnace (2) and an outlet opening (18) for the exit of a purified gas flow, and a bottom part (13), comprising a hopper (14) for the collection of precipitated solid particulate matter;
- a generator (20) of a heated heat exchange fluid, in fluid communication with said at least one cyclone (10) for receiving said purified gas flow and arranged downstream with respect to said at least one cyclone, wherein said generator (20) of a heated heat exchange fluid comprises a heat exchange zone (22), in which a heat exchange unit (23) is located, and a discharge opening (24) for the exit of a cooled exhaust gas flow, said heat exchange unit (23) preferably being a conventional heat exchanger;
wherein said furnace (2) and said at least one cyclone (1) form together a single adiabatic chamber.

6. The system according to claim 5, wherein said at least one cyclone (10) consists of at least two cyclones, said at least two cyclones preferably being arranged in parallel.

7. The system according to claim 5 or 6, wherein said system further comprises the following units:
- an additional generator (40) of a heated heat exchange fluid, in fluid communication with said discharge opening (24), for receiving said purified gas flow, wherein said additional generator (40) of a heated heat exchange fluid comprises an additional heat exchange zone (41), in which an additional heat exchange unit (38) is located, and an additional discharge opening (39) for the exit of a further cooled exhaust gas flow, said additional heat exchange unit (38) preferably being a conventional heat exchanger.

8. The system according to anyone of claims 5-7, wherein said furnace (2) comprises an inlet mouth (3) of said combustion chamber (4) for the supply of fuel into said combustion chamber (4), and an opening (7) for the introduction of a flow of combustive air into said combustion chamber (4).

9. The system according to claim 8, wherein said system further comprises the following units:
- a pre-heater (30) in fluid communication with said discharge opening (24) or with said additional discharge opening (39) for the exit of a cooled exhaust gas flow from said generator (20) or from said additional generator (40) of a heated heat exchange fluid, wherein said pre-heater (30) is capable to receive said cooled exhaust gas flow and to generate a flow of heated air;
- a header (35) in fluid communication with said pre-heater (30) and with said opening (7) for the introduction of a flow of combustive air into said combustion chamber (4), wherein said header (35) is capable to transfer said flow of heated air to said opening (7) for a flow of air, as a flow of combustive air.

10. The system according to any one of claims 5-9, wherein said heat exchange fluid is water or a diathermic oil.

11. The system according to any one of claims 5-10, wherein said system further comprises an inlet pipe (29; 36) for transferring said heat exchange fluid to said heat exchange unit (23) or to said additional heat exchange unit (38), and an outlet pipe (28; 37) for transferring said heated heat exchange fluid from said heat exchange unit (23) or from said additional heat exchange unit (38) to a system for the generation of electricity or to a utility in industrial or civil applications.

## Patentansprüche

1. Verfahren für die Erzeugung eines Wärmeaustauschfluids, das durch die Verbrennung eines Brennstoffs erhitzt wird, wobei das Verfahren die folgenden Schritte umfasst:
a) Verbrennen des Brennstoffs in einem Ofen, der eine Brennkammer aufweist, wodurch eine Strömung von Abgas erzeugt wird, die schwebende Feststoffpartikel enthält,
b) Übertragen der Strömung von Abgas zu wenigstens einer Wirbelkammer, die sich außerhalb der Brennkammer befindet,
c) Aussetzen der Strömung von Abgas einer erzwungenen Entfernung von Feststoffpartikeln in der wenigstens einen Wirbelkammer, wodurch eine Strömung von gereinigtem Abgas und eine Feststoffausfällung, die die Feststoffpartikel enthält, erhalten werden;
d) Übertragen der Strömung von gereinigtem Abgas zu einer Wärmetauschereinheit, in der ein Wärmeaustauschfluid strömt;
e) Ausführen eines indirekten Wärmeaustauschs zwischen der Strömung von gereinigtem Abgas und dem Wärmeaustauschfluid, wodurch eine Strömung von gekühltem gereinigtem Gas und ein erhitztes Wärmeaustauschfluid erhalten werden;
wobei die Strömung von Abgas und die Strömung von gereinigtem Abgas eine Temperatur von über 400 °C haben;
**dadurch gekennzeichnet, dass**
die Schritte a-d unter adiabatischen Bedingungen ausgeführt werden.

2. Verfahren nach Anspruch 1, wobei die Schritte b) und c) mittels wenigstens zweier Wirbelkammern ausgeführt werden, wobei die wenigstens zwei Wirbelkammern vorzugsweise parallel betrieben werden.

3. Verfahren nach Anspruch 1 oder 2, wobei das Verfahren die folgenden Schritte umfasst:
- Übertragen der Strömung von gekühltem Abgas zu einer Vorheizvorrichtung, um eine Strömung von erhitzter Luft zu erzeugen;
- Übertragen der Strömung von erhitzter Luft als eine Strömung von Verbrennungsluft zum Ofen und Zuführen zur Brennkammer des Ofens.

4. Verfahren nach einem der Ansprüche 1 bis 3, wobei das Verfahren einen weiteren Schritt zum Übertragen des erhitzten Wärmeaustauschfluids von der Wärmetauschereinheit zu einem System für die Erzeugung von Elektrizität umfasst.

5. System (1) zum Ausführen des Verfahrens nach Anspruch 1, wobei das System die folgenden Einheiten umfasst:
- einen Ofen (2), der eine Brennkammer (4) aufweist, die zum Verbrennen eines Brennstoffs mit der Erzeugung eines Abgases, das schwebende Feststoffpartikel enthält, geeignet ist;
- wenigstens eine Wirbelkammer (10) in Fluidkommunikation mit dem Ofen (2) zum Entfernen der schwebenden Feststoffpartikel, wobei die wenigstens eine Wirbelkammer (10) ein oberes Teil (11), das eine Eintrittsöffnung (12) für das Eintreten der Strömung von Gas vom Ofen (2) und eine Austrittsöffnung (18) für das Austreten einer Strömung von gereinigtem Gas umfasst, und ein unteres Teil (13), das einen Trichter (14) zum Sammeln der ausgefällten Feststoffpartikel aufweist, umfasst,
- einen Generator (20) für ein erhitztes Wärmeaustauschfluid in Fluidkommunikation mit der wenigstens einen Wirbelkammer (10) zum Aufnehmen der Strömung von gereinigtem Gas, und der stromabwärts in Bezug auf die wenigstens eine Wirbelkammer angeordnet ist, wobei der Generator (20) für ein erhitztes Wärmeaustauschfluid eine Wärmeaustauschzone (22), in der sich eine Wärmetauschereinheit (23) befindet, und eine Austrittsöffnung (24) für das Austreten einer Strömung von gekühltem Abgas umfasst, wobei die Wärmetauschereinheit (23) vorzugsweise ein konventioneller Wärmetauscher ist;
wobei der Ofen (2) und die wenigstens eine Wirbelkammer (1) zusammen eine einzelne adiabatische Kammer bilden.

6. System nach Anspruch 5, wobei die wenigstens eine Wirbelkammer (10) aus wenigstens zwei Wirbelkammern besteht, wobei die wenigstens zwei Wirbelkammern vorzugsweise parallel angeordnet sind.

7. System nach Anspruch 5 oder 6, wobei das System ferner die folgenden Einheiten umfasst:
- einen zusätzlichen Generator (40) für ein erhitztes Wärmeaustauschfluid in Fluidkommunikation mit der Austrittsöffnung (24), um die Strömung von gereinigtem Gas aufzunehmen, wobei der zusätzliche Generator (40) für ein erhitztes Wärmeaustauschfluid eine zusätzliche Wärmeaustauschzone (41), in der sich eine zusätzliche Wärmetauschereinheit (38) befindet, und eine zusätzliche Austrittsöffnung (39) für das Austreten einer Strömung von weiter gekühltem Abgas umfasst, wobei die zusätzliche Wärmetauschereinheit (38) vorzugsweise ein herkömmlicher Wärmetauscher ist.

8. System nach einem der Ansprüche 5-7, wobei der Ofen (2) eine Eintrittsöffnung (3) der Brennkammer (4) für die Zufuhr von Brennstoff in die Brennkammer (4) und eine Öffnung (7) zum Einleiten einer Strömung von Verbrennungsluft in die Brennkammer (4) umfasst.

9. System nach Anspruch 8, wobei das System ferner die folgenden Einheiten umfasst:
- eine Vorheizvorrichtung (30) in Fluidkommunikation mit der Austrittsöffnung (24) oder mit der zusätzlichen Austrittsöffnung (39) für das Austreten einer Strömung von gekühltem Abgas aus dem Generator (20) oder aus dem zusätzlichen Generator (40) für ein erhitztes Wärmeaustauschfluid, wobei die Vorheizvorrichtung (30) die Strömung von gekühltem Abgas aufnehmen und eine Strömung von erhitzter Luft erzeugen kann;
- ein Kopfteil (35) in Fluidkommunikation mit der Vorheizvorrichtung (30) und mit der Öffnung (7) zum Einleiten einer Strömung von Verbrennungsluft in die Brennkammer (4), wobei das Kopfteil (35) die Strömung von erhitzter Luft zur Öffnung (7) für eine Strömung von Luft als eine Strömung von Verbrennungsluft übertragen kann.

10. System nach einem der Ansprüche 5-9, wobei das Wärmeaustauschfluid Wasser oder ein diathermisches Öl ist.

11. System nach einem der Ansprüche 5-10, wobei das System ferner ein Eintrittsrohr (29; 36) zum Übertragen des Wärmeaustauschfluids zur Wärmetauschereinheit (23) oder zur zusätzlichen Wärmetauschereinheit (38) und ein Austrittsrohr (28; 37) zum Übertragen des erhitzten Wärmeaustauschfluids von der Wärmetauschereinheit (23) oder von der zusätzlichen Wärmetauschereinheit (38) zu einem System für die Erzeugung von Elektrizität oder zu einer Versorgungseinrichtung in industriellen oder zivilen Einsatzbereichen umfasst.

## Revendications

1. Procédé de production d'un fluide caloporteur chauffé par combustion d'un combustible, procédé comprenant les étapes consistant à :
a) brûler ledit combustible dans un four comprenant une chambre de combustion, générant ainsi un flux de gaz d'échappement comprenant des particules solides en suspension ;
b) transférer ledit flux de gaz d'échappement vers au moins un cyclone situé à l'extérieur de ladite chambre de combustion ;
c) soumettre ledit flux de gaz d'échappement à une réduction forcée desdites particules solides à l'intérieur dudit au moins un cyclone, obtenant ainsi un flux de gaz d'échappement purifié et un précipité solide comprenant lesdites particules solides ;
d) transférer ledit flux de gaz d'échappement purifié vers une unité d'échange de chaleur à l'intérieur de laquelle circule un fluide caloporteur ;
e) réaliser un échange de chaleur indirect entre ledit flux de gaz d'échappement purifiés et ledit fluide caloporteur, obtenant ainsi un flux de gaz purifiés refroidis et un fluide caloporteur chauffé ;
ledit flux de gaz d'échappement et ledit flux de gaz d'échappement purifiés ayant une température supérieure à 400 °C ;
**caractérisé en ce que** lesdites étapes a-d sont réalisées dans des conditions adiabatiques.

2. Procédé selon la revendication 1, dans lequel lesdites étapes b) et c) sont réalisées au moyen d'au moins deux cyclones, lesdits au moins deux cyclones fonctionnant de préférence en parallèle.

3. Procédé selon la revendication 1 ou 2, comprenant les étapes consistant à :
- transférer ledit flux de gaz d'échappement refroidi à un préchauffeur pour générer un flux d'air chauffé ;
- transférer audit four, et alimenter la chambre de combustion de ce four, ledit flux d'air chauffé, en tant que flux d'air de combustion.

4. Procédé selon l'une quelconque des revendications 1 à 3, comprenant une étape supplémentaire consistant à transférer ledit fluide caloporteur chauffé de l'unité d'échange de chaleur vers un système de production d'électricité.

5. Système (1) pour la mise en oeuvre du procédé selon la revendication 1, ledit système comprenant les unités suivantes :
- un four (2) comprenant une chambre de combustion (4) adaptée à la combustion d'un combustible avec production d'un gaz d'échappement comprenant des particules solides en suspension ;
- au moins un cyclone (10) en communication fluidique avec ledit four (2) pour la réduction desdites particules solides en suspension, ledit au moins un cyclone (10) comprenant une partie supérieure (11) comprenant une ouverture d'entrée (12) pour l'entrée dudit flux de gaz provenant dudit four (2), et une ouverture de sortie (18) pour la sortie d'un flux de gaz purifié, et une partie inférieure (13), comprenant une trémie (14) pour la collecte de particules solides précipitées ;
- un générateur (20) de fluide caloporteur chauffé, en communication fluidique avec ledit au moins un cyclone (10) pour recevoir ledit flux de gaz purifié et disposé en aval par rapport audit au moins un cyclone, ledit générateur (20) de fluide caloporteur chauffé comprenant une zone d'échange thermique (22) dans laquelle se trouve une unité d'échange thermique (23), et une ouverture de décharge (24) pour la sortie d'un flux de gaz d'échappement refroidi, ladite unité d'échange thermique (23) étant de préférence un échangeur de chaleur conventionnel ;
ledit four (2) et ledit au moins un cyclone (1) formant ensemble une seule chambre adiabatique.

6. Système selon la revendication 5, dans lequel ledit au moins un cyclone (10) consiste en au moins deux cyclones, lesdits au moins deux cyclones étant de préférence disposés en parallèle.

7. Système selon la revendication 5 ou 6, dans lequel ledit système comprend en outre les unités suivantes :
- un générateur supplémentaire (40) de fluide caloporteur chauffé, en communication fluide avec ladite ouverture de décharge (24), pour recevoir ledit flux de gaz purifié, ledit générateur supplémentaire (40) de fluide caloporteur chauffé comprenant une zone d'échange thermique supplémentaire (41) dans laquelle se trouve une unité d'échange thermique supplémentaire (38), et une ouverture de décharge supplémentaire (39) pour la sortie d'un flux supplémentaire de gaz d'échappement refroidi, ladite unité d'échange thermique supplémentaire (38) étant de préférence un échangeur de chaleur conventionnel.

8. Système selon l'une quelconque des revendications 5 à 7, dans lequel ledit four (2) comprend une bouche d'entrée (3) de ladite chambre de combustion (4) pour l'alimentation du combustible dans ladite chambre de combustion (4), et une ouverture (7) pour l'introduction d'un flux d'air de combustion dans ladite chambre de combustion (4).

9. Système selon la revendication 8, dans lequel ledit système comprend en outre les unités suivantes :
- un préchauffeur (30) en communication fluidique avec ladite ouverture de décharge (24) ou avec ladite ouverture de décharge supplémentaire (39) pour la sortie d'un flux de gaz d'échappement refroidi provenant dudit générateur (20) ou dudit générateur supplémentaire (40) de fluide caloporteur chauffé, ledit préchauffeur (30) est apte à recevoir ledit flux de gaz d'échappement refroidi et de générer un flux d'air chauffé ;
- un collecteur (35) en communication fluidique avec ledit préchauffeur (30) et avec ladite ouverture (7) pour l'introduction d'un flux d'air de combustion dans ladite chambre de combustion (4), ledit collecteur (35) étant capable de transférer ledit flux d'air chauffé à ladite ouverture (7) pour un flux d'air, en tant que flux d'air de combustion.

10. Système selon l'une quelconque des revendications 5 à 9, dans lequel le fluide caloporteur est de l'eau ou une huile diathermique.

11. Système selon l'une quelconque des revendications 5 à 10, dans lequel ledit système comprend en outre un tuyau d'entrée (29 ; 36) pour transférer ledit fluide caloporteur à ladite unité d'échange de chaleur (23) ou à ladite unité d'échange de chaleur supplémentaire (38), et un tuyau de sortie (28 ; 37) pour transférer ledit fluide caloporteur chauffé de ladite unité d'échange de chaleur (23) ou de ladite unité d'échange de chaleur supplémentaire (38) à un système de production d'électricité ou à un service pour des applications industrielles ou civiles.
